# EUROPÄISCHE PATENTANMELDUNG

(11) **EP 0 703 546 A1**
(43) Veröffentlichungstag der Anmeldung: **27.03.1996**
(21) Anmeldenummer: 95113026.9
(22) Anmeldetag: 18.08.1995
(51) Int. Cl.: G06T 5/00

(54) **Verfahren zur Aufschärfung von Bildkonturen von digitalisierten Bildern**

(30) Priorität: 19.09.1994 IT BZ940055
(71) Anmelder: DURST PHOTOTECHNIK A.G., I-39042 Brixen (IT)
(72) Erfinder: Obertegger, Franz, I-39042 Brixen (IT); Aufschnaiter von, Norbert, I-39018 Terlan (IT); Niederbacher, Andrä, I-39031 Bruneck (IT); Müssigmann, Uwe, D-71067 Sindelfingen (DE)
(74) Vertreter: Ritter und Edler von Fischern, Bernhard, Dipl.-Ing.

(57) **Zusammenfassung**

Die Erfindung betrifft ein Verfahren zur Konturaufschärfung von ausgewählten Bildobjekten in einem bestimmen Bereich eines digitalisierten farbigen oder grauwertigen Ausgangsbildes in einer Bildbearbeitungseinrichtung, umfassend folgende Schritte: Erzeugung eines nur die ausgewählten Bildobjekte enthaltenden ersten Binärbildes (31), in welchem die Bildobjekte schwarz sind und alles übrige weiß; Erzeugung eines zweiten, nur die Außenkonturen der Bildobjekte enthaltenden Binärbildes (33); Zerlegung der Außenkonturen in Segmente definierter geometrischer Kurvenformen durch Bestimmung signifikanter Punkte auf den Außenkonturen und Korrelation dieser Punkte mit bestimmten geometrischen Kurvenformen; Erzeugung eines Binärbildes der Außenkonturen (36) der Bildobjekte, wobei die Auflösung der Konturen der des zur Verfügung stehenden Rasters entspricht, durch Zusammenfügen der mit den signifikanten Punkten korrelierten geometrischen Kurvenformen; Erzeugung eines farbigen oder grauwertigen Bildes (37) durch Auffüllen der Außenkonturen mit einem bestimmten Farb- oder Grauwert; und Erzeugung eines überlagerten Endbildes durch Einfügen des durch Auffüllen der Außenkontur entstandenen farbigen oder grauwertigen Bildes in das Ausgangsbild.

## Beschreibung

Die vorliegende Erfindung betrifft ein Verfahren zur Aufschärfung von Bildkonturen digitalisierter Bilder.

Gängige Bildbearbeitungsvorrichtungen bestehen üblicherweise aus einer Vorrichtung zum Digitalisieren einer Bild-Text-Vorlage, der eigentlichen Überarbeitungseinrichtung für die digitalisierten Daten sowie einer geeigneten Druckvorrichtung. Ein Beispiel wäre ein System bestehend aus einem Farbscanner, einem PC sowie einem Farblaserdrucker.

In einem Scanner wird eine Vorlage entsprechend einem vorgegebenen Raster abgetastet, d.h. die Vorlage wird als Matrix von Bildpunkten dargestellt, wobei jedem Bildpunkt ein bestimmter Helligkeitswert zugeordnet wird. Im einfachsten Fall, dem des Binärbildes, sind alle Punkte entweder schwarz oder weiß. Bei der Abtastung mit abgestuften Helligkeitswerten erzeugt man Bildpunkte mit einem bestimmten Grauwert (bei Schwarz-Weiß-Abbildungen) bzw. einem bestimmten Farbwert (bei Farbabbildungen). Die Grauwertstufung geschieht beispielsweise durch Zuordnung eines Wertes zwischen Null (entspricht schwarz) und 255 (entspricht weiß). Eine Farbwertstufung geschieht in Erweiterung des Graustufensystems, dadurch daß man den Bildpunkten RGB-Zahlentripel zuordnet (R = rot, G = grün, B = blau), wobei jeder der drei Werte eine Zahl zwischen Null und 255 ist.

Die Auflösung des Rasters, d.h. die Seitenabmessungen eines einzelnen viereckigen Bildpunktes, werden begrenzt von dem Herstellungsverfahren der Vorlage, welche gescannt wird, von den Abtastmöglichkeiten der Einlesevorrichtung, von der Rechen- und Speicherkapazität der Verarbeitungseinrichtung sowie von dem Druckraster der Ausdruckvorrichtung.

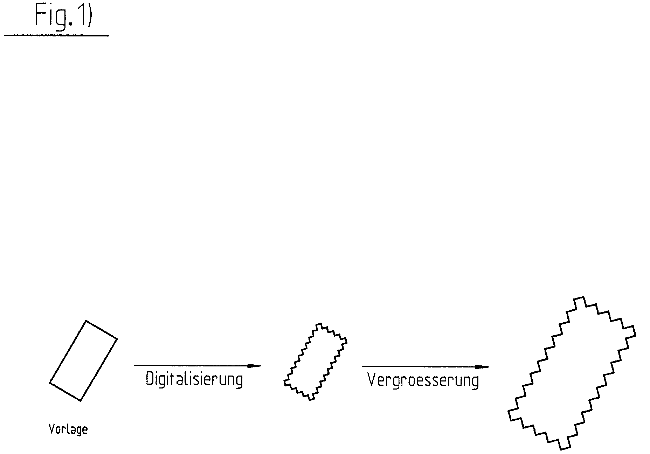

Ein Problem bei der Digitalisierung und Abbildung auf ein Raster ist der Verlust an Kontrast eines Bildes. Dies hat seine Ursache darin, daß glatte Linien und Kurven nach der Digitalisierung treppenartig werden, beispielsweise aufgrund der endlichen Bildpunktbreite und Bildpunkthöhe des Rasters. Dieser Kontrastverlust wird noch verschlimmert bei der Abbildung eines groben Rasters auf ein feineres. Hierbei wird nämlich nicht die glatte Linie abgebildet, sondern das treppenartige Muster. Beispiele für solche Abbildungen sind das Vergrößern eines digitalisierten Bildes bei konstanter Rasterauflösung und die Abbildung eines Bildes, welches mit einem bestimmten Scanraster digitalisiert wurde, auf ein feineres Bearbeitungs- oder Speicherraster. Figur 1 veranschaulicht diesen Effekt für den Fall der Vergrößerung.

Ein solcher Kontrastverlust tritt umso deutlicher zutage, je stärker der Kontrastunterschied auf der Bildvorlage war. Solche starken Kontrastunterschiede treten insbesondere bei in eine Fotografie eingefügten Schriftzeichen auf, wie sie beispielsweise in Werbeabbildungen gebräuchlich sind. Es ist jedoch wünschenswert, gerade diesen Kontrast der Schriftzeichen zum übrigen Bild zu bewahren, da sich die Schrift vom übrigen Bild abheben soll.

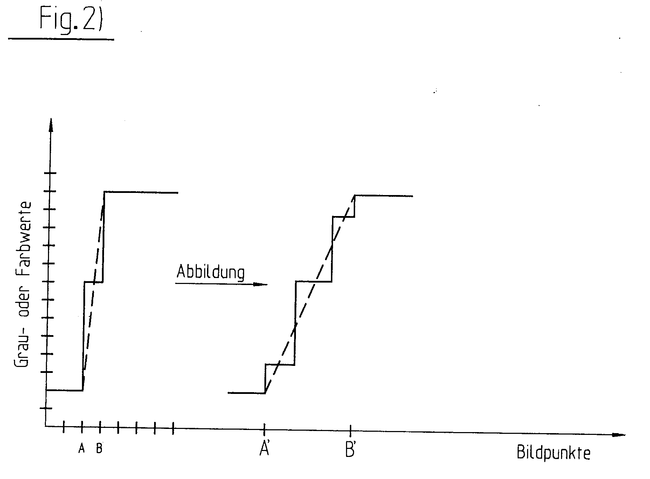

Ein weiterer Kontrastverlust bei der Abbildung von groben auf feine Raster kann durch Interpolationsroutinen auftreten, die dazu dienen, Farbwert- oder Grauwertinformation zu ergänzen. Das feinere Raster hat nämlich eine höhere Informationskapazität als das grobe, so daß die Kapazität des feinen Rasters nicht ausgeschöpft wird. Werden die Bildpunkte des groben Rasters gleichmäßig auf eine gleiche Zahl von Bildpunkten im feineren Raster abgebildet, so müssen die verbleibenden Bildpunkte belegt werden, was üblicherweise durch Interpolation geschieht. Dies ist beispielhaft in Figur 2 für die Abbildungen zweier Punkte A, B auf zwei Punkte A', B' dargestellt. Diese Ergänzung von Farb- oder Grauwerten bewirkt einen harmonischen Bildeindruck bei Fotografien, bewirkt aber gleichzeitig einen Kontrastverlust. Dies ist aus den erwähnten Gründen nachteilig bei der Abbildung von Bildern, in die Schriftzeichen oder andere zusätzliche, sich abhebende Objekte eingefügt wurden, da dann die im Originalbild scharfen Konturen im digitalisierten Bild aufgeweicht werden.

Das Bedürfnis, die Kontur bestimmter Bildobjekte aufzuschärfen, ergibt sich jedoch nicht nur aufgrund spezieller Eigenschaften digitaler Raster, sondern hat grundsätzliche Bedeutung, da unscharfe Konturen und Kontrastarmut auch andere Ursachen haben können, z.B. eine unscharfe Abbildungsoptik der Scanvorrichtung oder auch eine Bildvorlage, die von vornherein nicht über die gewünschte Konturschärfe verfügt und bei der man diese nachträglich erzeugen möchte.

Es ist die Aufgabe der vorliegenden Erfindung, ein Verfahren zur Konturaufschärfung an ausgewählten Bildobjekten in einem digitalisierten Bild zu schaffen.

Zur Lösung dieser Aufgabe umfaßt das erfindungsgemäße Verfahren zur Konturaufschärfung von ausgewählten Bildobjekten in einem digitalisierten Bild folgende Schritte:
- Erzeugung eines nur die ausgewählten Bildobjekte enthaltenden ersten Binärbildes, in welchem die Bildobjekte schwarz sind und alles übrige weiß;
- Erzeugung eines zweiten, nur die Außenkonturen der Bildobjekte enthaltenden Binärbildes;
- Zerlegung der Außenkonturen in Segmente definierter geometrischer Kurvenformen durch Bestimmung signifikanter Punkte auf den Außenkonturen und Korrelation dieser Punkte mit bestimmten geometrischen Kurvenformen;
- Erzeugung eines Binärbildes der Außenkonturen der Bildobjekte, wobei die Auflösung der Konturen der des zur Verfügung stehenden Rasters entspricht, durch Zusammenfügen der mit den signifikanten Punkten korrelierten geometrischen Kurvenformen;
- Erzeugung eines farbigen oder grauwertigen Bildes durch Auffüllen der Außenkonturen mit einem bestimmten Farb- oder Grauwert; und
- Erzeugung eines überlagerten Endbildes durch Einfügen des durch Auffüllen der Außenkontur entstandenen farbigen oder grauwertigen Bildes in das Ausgangsbild.

Weitere Merkmale und vorteilhafte Ausgestaltungen des erfindungsgemäßen Verfahrens werden im folgenden anhand der Abbildungen erläutert.
- Fig. 1: zeigt beispielhaft den Kontrastverlust bei der Vergrößerung eines digitalisierten Bildes.
- Fig. 2: zeigt den Kontrastverlust aufgrund der Interpolation von Grau- oder Farbwerten bei einer Abbildung eines groben Rasters auf ein feineres.
- Fig. 3: zeigt die Ergebnisse der einzelnen Schritte bei Durchführung bevorzugter Ausgestaltungen des erfindungsgemäßen Verfahrens.
- Fig. 4: gibt einen Überblick über die einzelnen Schritte einer bevorzugten Ausgestaltungsform des erfindungsgemäßen Verfahrens.
- Fig. 5: gibt einen Überblick über die einzelnen Schritte einer zweiten bevorzugten Ausgestaltungsform des erfindungsgemäßen Verfahrens.
- Fig. 6: erläutert die Vergrößerung einer Kante in einem digitalisierten Bild mit und ohne Aufweitung der Kontur vor der Vergrößerung.

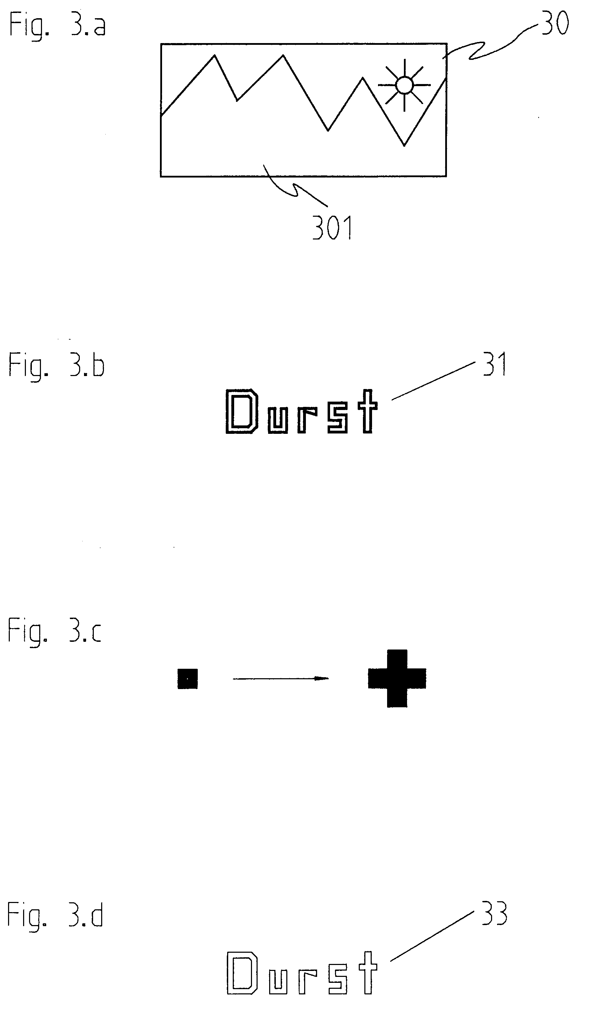

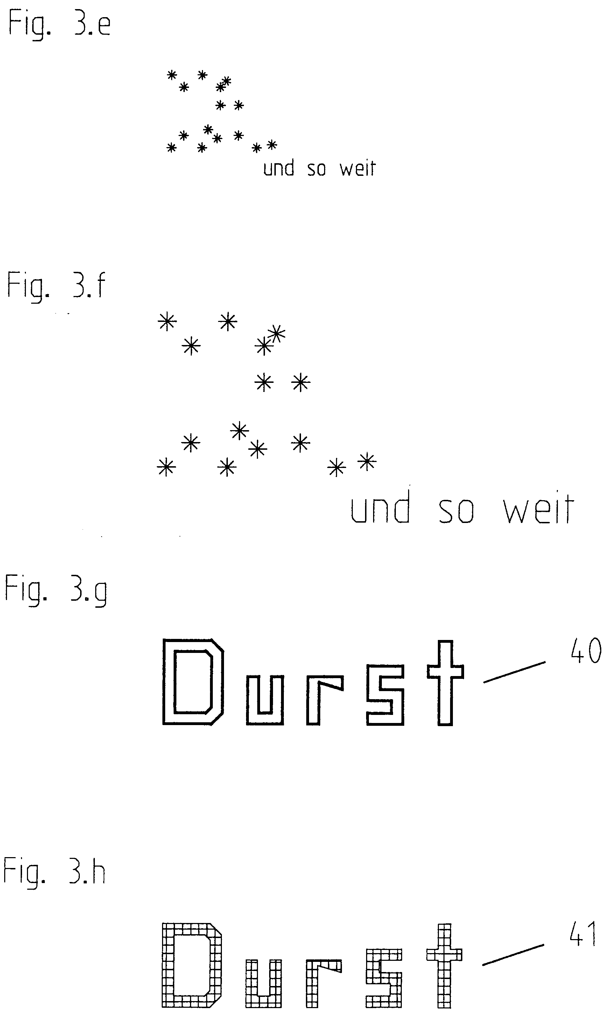

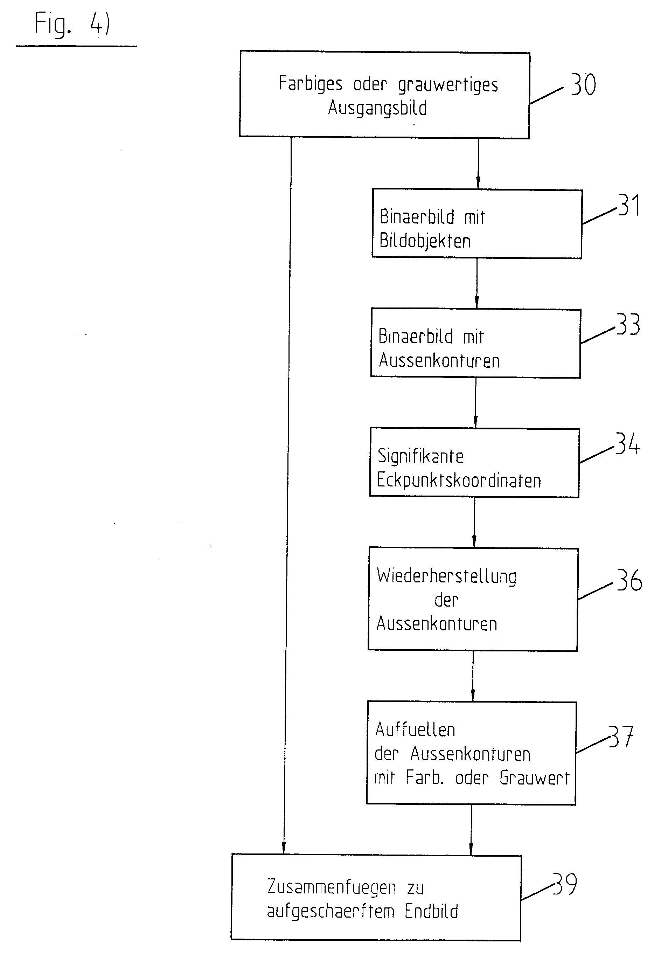

In folgenden soll anhand der Figuren 3 und 4 der Verfahrensablauf einer bevorzugten Ausführung des erfindungsgemäßen Verfahrens erläutert werden.

Grundsätzlich geschieht die Konturaufschärfung durch die Vektorisierung signifikanter Eckpunkte eines ausgewählten Objektes und Wiederherstellung der Kontur unter voller Ausschöpfung der Auflösung des zur Verfügung stehenden Rasters durch Interpolation der vektorisierten Eckpunkte.

Ausgegangen wird von einem Bildbereich 30, der ausgewählte Bildobjekte 301 enthält, deren Konturen aufgeschärft werden sollen. Der Bildbereich 30 kann ein komplettes, digitalisiertes, farbiges oder grauwertiges Bild sein oder auch nur ein Ausschnitt eines solchen Bildes.

Im vorliegenden Fall geschieht die Auswahl der Bildobjekte bevorzugt durch die Vorgabe eines Farbwert- oder Grauwert-Intervalls, innerhalb dessen sich die in den ausgewählten Objekten enthaltenden Bildpunkte befinden. Es sind jedoch auch andere Möglichkeiten denkbar, so z.B. daß die zu den Objekten gehörenden Bildpunkte bereits mit einem zusätzlichen Parameter gekennzeichnet sind (zusätzlich zu den Koordinaten und dem Farb- bzw. Grauwert), so daß die Auswahl über diesen zusätzlichen Parameter geschieht.

Mit Hilfe des vorgegebenen Farbwert- oder Grauwert-Intervalls wird aus dem Farbbild ein Binärbild erzeugt. Dies geschieht dadurch, daß jedem Bildpunkt, dessen Farb- oder Grauwert innerhalb des vorgegebenen Intervalls liegt, der Schwarzwert zugeordnet wird, allen übrigen Punkten hingegen der Weißwert. Dadurch entsteht aus dem Ausgangsbildbereich 30, das nur noch die ausgewählten Bildobjekte enthaltende Binärbild 31, wie in Figur 3B gezeigt.

Aus dem die Bildobjekte enthaltenden Binärbild 31 werden durch Konturverfolgung die Außenkonturen extrahiert und somit ein Binärbild 33 erzeugt, welches nur noch diese Außenkonturen enthält.

Bei der Konturverfolgung wird zunächst durch systematisches Absuchen des ausgewählten Bildbereichs nach einem Schwarz-Weiß-Übergang ein erster Konturpunkt ermittelt. Ausgehend von diesem Punkt wird durch Feststellen eines Schwarz-Weiß-Übergangs an einem benachbarten schwarzen Bildpunkt ein weiterer Konturpunkt ermittelt. Durch Wiederholung dieses Mechanismus ergibt sich die Folge von Konturpunkten, die dann aufhört, wenn man zum Ausgangspunkt der geschlossenen Kontur zurückgelangt.

In einem Schritt 34 werden dann die signifikanten Eckpunkte der Kontur bestimmt, um so die Kontur in Geradensegmente zu zerlegen. Hierzu wird in jedem Punkt der Kontur durch Hinzunahme benachbarter Punkte die lokale Konturkrümmung berechnet. Im einfachsten Fall geschieht dies durch Bestimmung eines Kreises, auf dem der betroffene Punkt, der vorherige sowie der nachfolgende Punkt liegen und Bildung eines charakteristischen Krümmungswertes aus dem Radius eines Kreises. Es sind jedoch auch Verfahren denkbar, die eine größere Anzahl von Punkten und andere Krümmungsdefinitionen verwenden. Als signifikante Eckpunkte werden vorzugsweise diejenigen Punkte der Kontur ausgewählt, die die Schnittpunkte der zu ermittelnden Geradensegmente bilden und im Krümmungsverlauf als Extrema zu erkennen sind. Es sind jedoch auch andere Segmentierungen denkbar, beispielsweise in Geradenstücke und Kreis- oder Ellipsensegmente, wobei dann der speziellen Segmentierung entsprechende Auswahlkriterien für die Bestimmung signifikanter Konturpunkte anzuwenden sind. Bei der Zerlegung in Geraden- oder Kreissegmente könnte man beispielsweise immer zwei Punkte einem Geradensegment zuordnen bzw. die drei Punkte einem Kreissegment. Das Ergebnis dieser Vektorisierung der Objektkonturen ist exemplarisch in Figur 3E dargestellt.

Vorzugsweise beinhaltet diese Konturbestimmung auch eine Glättung des Konturverlaufs vor der Bestimmung der signifikanten Punkte, so daß bei der Wiederherstellung 36 der Außenkontur unter voller Ausschöpfung des zur Verfügung stehenden Rasters auch Unschärfen, die von der ursprünglichen Vorlage herrühren, beseitigt werden können. Die Wiederherstellung 36 der Außenkonturen geschieht allgemein durch die Umkehrung des Segmentierverfahrens aus Schritt 34 und Anwendung auf die signifikanten Punkte. Im Falle der Geradensegmente geschieht die Wiederherstellung 36 durch Interpolation der signifikanten Eckpunkte. Schließlich wird die Außenkontur mit dem Farb- oder Grauwert im Originalbild oder einem bestimmten Farb- oder Grauwert aufgefüllt, d.h. aus den Außenkonturen wird ein farbwertiges oder grauwertiges Bild erzeugt durch Belegung aller Bildpunkte innerhalb der Konturen mit einem bestimmten Farb- oder Grauwert. Dieses aufgefüllte Bild wird dann in das Ausgangsbild 30 eingefügt, um so das Endbild 39 mit aufgeschärften Konturen der ausgewählten Bildobjekte zu erhalten.

Diese Auffüllung der Außenkontur geschieht beispielweise durch ein Verfahren bei den zunächst ein beliebiger Punkt innerhalb der Außenkontur bestimmt wird. Ein solcher Punkt kann z.B. in dem ersten Schritt 31 der Auswahl der Bildobjekte markiert worden sein. Diesem Punkt wird dann der bestimmte Farb- oder Grauwert beim Auffüllen zugeordnet. Danach werden alle acht diesen Punkt umgebenden Bildpunkte untersucht und allen, die nicht auf der Außenkontur liegen der bestimmte Farb- oder Grauwert zugeordnet. Sodann werden die Nachbarpunkte der acht umgebenden Punkte untersucht und wiederum jenen, die nicht auf der Außenkontur liegen, der bestimmte Farb- oder Grauwert zugewiesen. Dies wird solange fortgesetzt bis die gesamte Außenkontur aufgefüllt ist, d.h. bis alle Bildpunkte innerhalb der Außenkontur mit dem bestimmten Farb- oder Grauwert belegt sind.

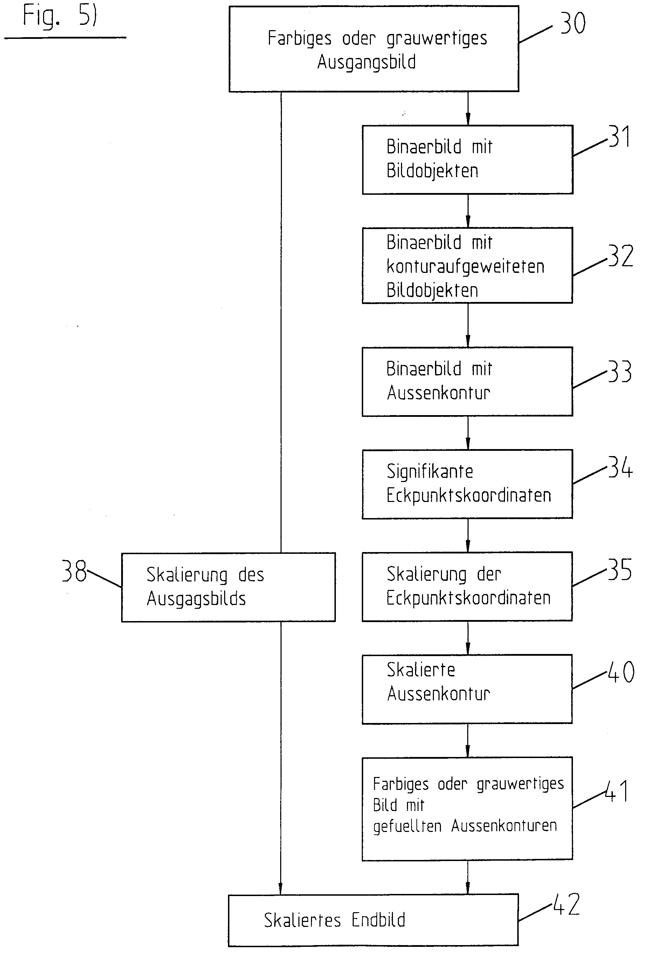

Eine besonders vorteilhafte Anwendung des erfindungsgemäßen Verfahrens liegt in der Skalierung digitalisierter Bilder, wie in Figur 5 dargestellt. In dieser Ausführungsform wird ebenfalls aus einem farbigen oder grauwertigen Ausgangsbild 30 ein Binärbild 31 mit den ausgewählten Bildobjekten erzeugt, wie für das vorhergehende Ausführungsbeispiel beschrieben.

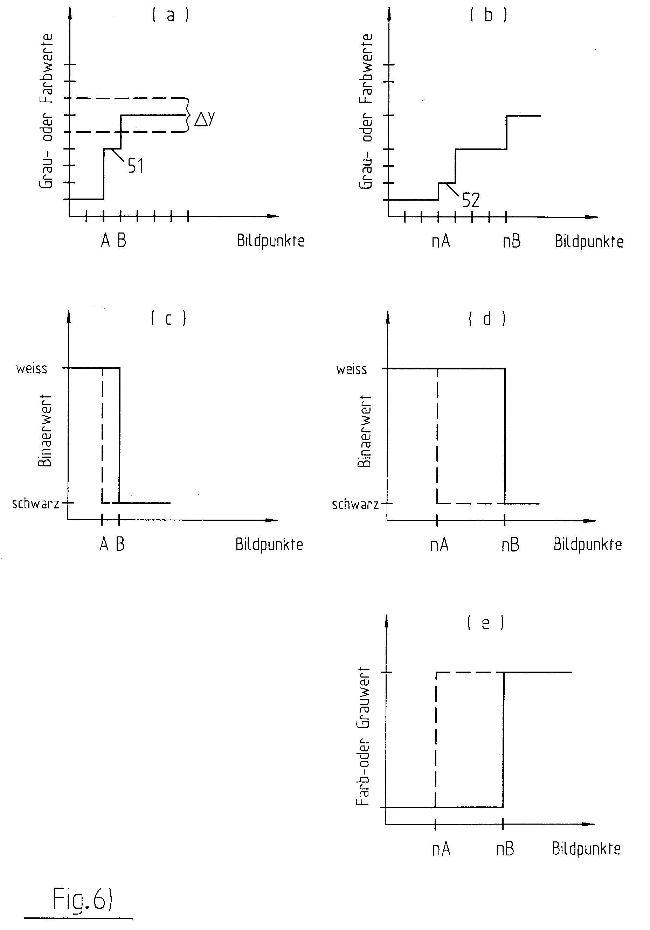

In einem zusätzlichen Schritt 32 wird das Binärbild 31 dilatiert, d.h. die Bildobjekte werden aufgeweitet durch Zuordnung des Schwarzwertes zu allen horizontal und vertikal unmittelbar benachbarten Bildpunkten der schwarzen Bildpunkte. Dies ist in Figur 3C dargestellt. Dieser Schritt dient der Vermeidung des durch Farb- oder Grauwertinterpolation entstehenden Kontrastverlusts, wie noch ausführlich anhand von Figur 6 erläutert wird. Es ist auch möglich, die Bildobjekte um mehr als einen Bildpunkt aufzuweiten bzw. zu ergänzen.

Danach wird wie im vorhergehenden Ausführungsbeispiel die Außenkontur 33 durch Konturverfolgung gewonnen, allerdings ausgehend von dem aufgeweiteten Bild 32. Daraus werden dann wie bereits beschrieben signifikante Punkte bestimmt, die mit der Segmentierung der Außenkonturen in bestimmte geometrische Kurvenformen korreliert sind. Vorzugsweise sind dies signifikante Eckpunkte 34, die sich aus den Extrema des Krümmungsverlaufs der Konturen ergeben, wie in Figur 3E dargestellt.

Im darauffolgenden Schritt 35 werden die Koordinaten der signifikanten Eckpunkte mit gegebenen Skalierparametern skaliert. Dies ist in Figur 3F abgebildet. Davon ausgehend wird zunächst durch Interpolation der Eckpunktskoordinaten die Außenkontur 40 der vergrößerten Bildobjekte berechnet, und schließlich wird durch das Auffüllen der skalierten Außenkonturen mit einem bestimmten Farb- oder Grauwert ein farbiges oder grauwertiges Bild 41, welches somit die vergrößerten Bildobjekte darstellt, erzeugt. Die Herstellung der skalierten Außenkonturen wird allgemein durch Umkehrung des Segmentierverfahrens aus Schritt 34 und Anwendung auf die skalierten signifikanten Punkte bewirkt. Vorzugsweise werden die Objekte mit einem Farb- oder Grauwert gefüllt, der dem des ursprünglichen Objektes 301 entspricht, die vergrößerten Objekte können jedoch selbstverständlich mit jedem beliebigen Farb- oder Grauwert belegt werden. Die Auffüllung kann wie bei dem vorhergehenden Ausführungsbeispiel erfolgen, nur daß der innerhalb der Außenkonturen liegende Anfangspunkt, der bei der Auswahl der Bildobjekte im ersten Schritt 31 bestimmt wurde, mitskaliert werden muß.

Schließlich wird in einem Schritt 38 das komplette Ausgangsbild mit einem üblichen Skalierverfahren zum Skalieren digitalisierter Bilder mit den gleichen Parametern skaliert wie die signifikanten Eckpunkte. Das ausgefüllte Bild 41 wird sodann in das skalierte Ausgangsbild eingefügt, um so ein skaliertes Endbild mit aufgeschärften Konturen der ausgewählten Bildobjekte zu erhalten.

Mit dem erfindungsgemäßen Verfahren ist es auch möglich, die Skalierung 38 mit der Einfügung des gefüllten Bildes 41 zu kombinieren, so daß die Skalierung und Einfügung gleichzeitig ablaufen. Dies erspart das Anlegen einer gesonderten Datei, die nur das skalierte digitalisiert Ausgangsbild enthalten würde, Dadurch wird Rechenzeit und Speicherkapazität gespart. Zu diesem Zweck könnte beispielsweise bei der Skalierung 38 vor der Belegung eines neuen Bildpunkts überprüft werden, ob dieser Punkt in dem aufgefüllten Bild 41 mit dem Auffüllwert belegt ist und wenn dies der Fall ist, der neue Bildpunkt im skalierten Bild 38 mit dem Farb- oder Grauwert des entsprechenden Punktes aus Bild 41 belegt werden, um so das Bild 42 zu erzeugen.

Ferner erlaubt das erfindungsgemäße Verfahren auch die gleichzeitige Verbindung des Skalierens des Ausgangsbildes, der Einfügung der skalierten und aufgefüllten Außenkonturen und der Ausgabe des überlagerten Endbildes auf einer geeigneten Ausgabevorrichtung ohne daß eine Zwischenbilddatei erstellt werden müsste. Hierzu wird die bei der Einfügung der skalierten Außenkonturen in das skaliert werdende Ausgangsbild gewonnene Bildinformation direkt an die Ausgabevorrichtung, z.B. einen Laserdrucker, weitergegeben. Dies erspart das Anlegen einer Zwischenbilddatei, bzw. ermöglicht überhaupt die Skalierung solcher Bilder, bei denen eine Abspeicherung des Zwischenbildes aufgrund von fehlendem Speicherplatz nicht möglich wäre.

Durch die Vektorisierung der Bildobjekte wird die in Figur 1 gezeigte Problematik der Vergrößerung von treppenartigen Randstrukturen vermieden. Die in Figur 3C gezeigte Aufweitung der Objekte ermöglicht, daß ein Konturverlust durch Interpolation bei den ausgewählten Bildobjekten vermieden wird. Dies wird im folgenden anhand von Figur 6 erläutert.

Figur 6A zeigt den Grau- oder Farbwertübergang an einer Objektkante in einem Ausgangsbild 30. Dieses Bild sei erzeugt aus einer Vorlage, die zwischen den Punkten A und B einen senkrechten Farbwertsprung hatte. Das Intervall Δy beschreibt den Bereich, der zum Bildobjekt gehört. Eine Vergrößerung 38 um einen Faktor n führt zu einem Ergebnis wie in Figur 6B dargestellt. Zu der in Figur 6A aufgrund des Einscannrasters auftretenden Graustufe 51 tritt durch Interpolation bei der Vergrößerung in Figur 6B die weitere Graustufe 52 hinzu. In Figur 6C ist das Ergebnis der erfindungsgemäßen Binärwertbildung 31 abgebildet. Die Erweiterung der Kontur ist mit einer gestrichelten Linie angedeutet. Wird nun dieses Bild um den Faktor n vergrößert, ergibt sich ein Verlauf wie in Abbildung Figur 6D. Die Auffüllung des Binärbildes 6D führt schließlich zu dem farbigen oder grauwertigen Bild 37 in Figur 6E. Wie man leicht erkennt würde der stufenförmige Verlauf (51, 52), der den Kontrast abschwächt, ohne die Konturaufweitung 32 bestehen bleiben. Dies erkennt man aus der Überlagerung von Figur 6E auf 5B. Wurde die Konturaufweitung hingegen durchgeführt, wie durch die gestrichelten Linien in den Figuren 6C - 6E dargestellt, so erkennt man, daß bei einer Überlagerung von Figur 6E auf Figur 6B der gestrichelte Bereich die durch die Interpolation entstandenen äußeren Zwischenstufen abdeckt. Auf diese Art wird also ein kontrastreicher Konturübergang im vergrößerten Bild gewährleistet.

## Patentansprüche

1. Verfahren zur Konturaufschärfung von ausgewählten Bildobjekten in einem bestimmen Bereich eines digitalisierten farbigen oder grauwertigen Ausgangsbildes in einer Bildbearbeitungseinrichtung, umfassend folgende Schritte:
- Erzeugung eines nur die ausgewählten Bildobjekte (301) enthaltenden ersten Binärbildes (31), in welchem die Bildobjekte schwarz sind und alles übrige weiß;
- Erzeugung eines zweiten, nur die Außenkonturen der Bildobjekte enthaltenden Binärbildes (33);
- Zerlegung der Außenkonturen in Segmente definierter geometrischer Kurvenformen durch Bestimmung signifikanter Punkte auf den Außenkonturen und Korrelation dieser Punkte mit bestimmten geometrischen Kurvenformen;
- Erzeugung eines Binärbildes der Außenkonturen (36) der Bildobjekte, wobei die Auflösung der Konturen der des zur Verfügung stehenden Rasters entspricht, durch Zusammenfügen der mit den signifikanten Punkten korrelierten geometrischen Kurvenformen;
- Erzeugung eines farbigen oder grauwertigen Bildes (37) durch Auffüllen der Außenkonturen mit einem bestimmten Farb- oder Grauwert; und
- Erzeugung eines überlagerten Endbildes durch Einfügen des durch Auffüllen der Außenkontur entstandenen farbigen oder grauwertigen Bildes in das Ausgangsbild.

2. Verfahren nach Anspruch 1, dadurch gekennzeichnet, daß aus dem ersten Binärbild (31) ein weiteres Binärbild (32) erzeugt wird, welches konturaufgeweitete Bildobjekte enthält, die durch Aufweitung der Bildobjekte des ersten Binärbildes (31) um eine bestimmte Anzahl von Bildpunkten erhalten werden, und das zweite, die Außenkonturen enthaltende Binärbild (33) aus diesem weiteren konturaufgeweiteten Binärbild (32) erzeugt wird.

3. Verfahren nach Anspruch 1 oder 2, dadurch gekennzeichnet, daß
- nach der Zerlegung der Außenkonturen die signifikanten Punkte mit gegebenen Skalierparametern skaliert werden (35);
- die skalierten Außenkonturen (40) der Bildobjekte durch Zusammenfügen der mit den skalierten signifikanten Punkten korrelierten geometrischen Kurvenformen in einem Binärbild erzeugt werden, wobei die Auflösung der Konturen der des zur Verfügung stehenden Rasters entspricht;
- die Erzeugung des farbigen oder grauwertigen Bildes (41) der aufgefüllten Außenkonturen durch Auffüllen der skalierten Außenkonturen (40) vollzogen wird;
- das digitalisierte Ausgangsbild mit den gegebenen Skalierparametern skaliert wird (38); und
- das überlagerte Endbild durch Einfügen des durch Auffüllen der skalierten Außenkontur entstandenen farbigen oder grauwertigen Bildes in das skalierte Ausgangsbild erzeugt wird.

4. Verfahren nach nach Anspruch 3, dadurch gekennzeichnet, daß die Skalierung des digitalsierten Ausgangsbilds (38), die Einfügung der aufgefüllten und skalierten Außenkontur und die Ausgabe des überlagerten Endbildes auf einer Ausgabevorrichtung gleichzeitig und ohne Erstellung einer Zwischenbilddatei erfolgen.

5. Verfahren nach einem der Ansprüche 1 bis 4, dadurch gekennzeichnet, daß die Erzeugung des ersten Binärbildes (31), ausgehend vom bestimmten Bereich des digitalisierten Ausgangsbildes (30), durch Zuordnung des Schwarzwertes zu allen Bildpunkten mit einem Farb- oder Grauwert innerhalb eines bestimmten Intervalls und Zuordnung des Weißwerts zu allen übrigen Bildpunkten innerhalb des bestimmten Bildbereichs vollzogen wird.

6. Verfahren nach einem der Ansprüche 2 bis 5, dadurch gekennzeichnet, daß die Erzeugung des weiteren, die konturaufgeweiteten Bildobjekte enthaltenden Binärbildes (32) durch Zuordnung des Schwarzwertes zu allen horizontal und vertikal unmittelbar benachbarten Bildpunkten der schwarzen Bildpunkte des ersten Binärbildes vollzogen wird.

7. Verfahren nach einem der Ansprüche 1 bis 6, dadurch gekennzeichnet, daß die Außenkonturen der Bildobjekte durch Konturverfolgung bestimmt werden, wobei
- ein erster Punkt einer Außenkontur durch systematisches Absuchen der Bildpunkte des ausgewählten Bildbereiches nach einem von einem weißen Bildpunkt benachbarten schwarzen Bildpunkt vollzogen wird; und
- ausgehend von diesem ersten Punkt durch Verfolgung des Schwarz-Weiß-Übergangs zu benachbarten schwarzen Bildpunkten weitere Bildpunkte der Kontur bestimmt werden, solange bis die Verfolgung des Überganges zurück zu dem ersten Punkt gefunden hat.

8. Verfahren nach einem der Ansprüche 1 bis 7, dadurch gekennzeichnet, daß bei der Zerlegung der Außenkonturen in Segmente Geradensegmente gebildet werden.

9. Verfahren nach Anspruch 8, dadurch gekennzeichnet, daß die Zerlegung in Geradensegmente vollzogen wird durch
- die Berechnung der lokalen Konturkrümmung in jedem Bildpunkt der Außenkonturen und Auswählen der Punkte als signifikante Punkte, deren lokale Konturkrümmung ein lokales Extremum bildet.

10. Verfahren nach Anspruch 9, dadurch gekennzeichnet, daß die Erzeugung der Außenkonturen (36, 40) der wiederhergestellten Bildobjekte durch Interpolation der signifikanten Punkte vollzogen wird.

11. Verfahren nach einem der Ansprüche 1 bis 7, dadurch gekennzeichnet, daß die Zerlegung der Außenkonturen in Segmente durch Zerlegung in Geradensegmente und Ellipsensegmente vollzogen wird.

12. Verfahren nach einem der Ansprüche 1 bis 11, dadurch gekennzeichnet, daß die Erzeugung des überlagerten Endbildes (39, 42) durch Zuordnung des bestimmten Farb- oder Grauwerts zu allen Bildpunkten im farbigen oder grauwertigen Ausgangsbild (30) oder im skalierten Ausgangsbild (38), die im die aufgefüllten Außenkonturen enthaltenden (37, 41) diesen Wert haben, vollzogen wird.
